# FASCICULE DE BREVET EUROPEEN

(11) **EP 2 595 088 B1**
(45) Date de publication et mention de la délivrance du brevet: **27.05.2015**
(21) Numéro de dépôt: 12191427.9
(22) Date de dépôt: 06.11.2012
(51) Int. Cl.: G06K 7/10

(54) **Appareil de lecture d'étiquettes RFID**
Device for reading RFID tags
RFID-Etikettenlesegerät

(30) Priorité: 17.11.2011 FR 1160469
(43) Date de publication de la demande: 22.05.2013
(73) Titulaire: IER, 92150 Suresnes (FR)
(72) Inventeur: Pierre, Philippe, 93440 DUGNY (FR)
(74) Mandataire: Pontet Allano & Associes

(56) Documents cités:
- EP-A2- 1 398 725
- WO-A1-02/073512
- WO-A1-2008/075868
- US-A1- 2001 013 830
- US-A1- 2006 113 369

## Description

La présente invention concerne un appareil de lecture d'étiquettes et plus particulièrement d'étiquettes RFID.

Le domaine de l'invention est le domaine des appareils de lecture d'étiquettes RFID portables et sans fil et en particulier des appareils de lecture d'étiquettes RFID utilisés pour réaliser des inventaires.

De nos jours les étiquettes RFID sont utilisées couramment pour l'identification, le suivi et la gestion d'objets. Les systèmes utilisant la technologie RFID permettent une gestion automatisée plus fiable et plus rapide d'objets dans de nombreux domaines.

L'utilisation des étiquettes RFID s'accompagne de la nécessité de disposer d'appareils de lecture d'étiquettes RFID, notamment des appareils de lecture portables et adaptés pour réaliser un inventaire.

Actuellement, il existe des appareils de lecture d'étiquettes RFID portables et sans fil permettant de lire une donnée d'identification RFID depuis une étiquette RFID, mémoriser la donnée d'identification lue et au besoin traiter cette donnée d'identification en vue, par exemple, de déterminer si cette donnée d'identification a déjà été lue ou non.

Les appareils de lecture d'étiquettes RFID comprennent souvent des moyens de lecture d'une étiquette RFID et des moyens de visualisation de la donnée lue, par exemple un écran d'affichage. Il existe également des appareils munis de lecteurs d'étiquette RFID et comprenant en outre un clavier permettant à l'utilisateur de saisir une donnée alphanumérique ou de sélectionner une donnée préalablement lue, par exemple un assistant numérique personnel (PDA pour « Personal Digital assistant).

On connaît notamment un terminal d'inventaire comprenant une poignée pour la saisie du terminal par l'utilisateur, un PDA muni d'un écran agencé au-dessus de la poignée de sorte que l'écran soit perpendiculaire à celle-ci afin que l'utilisateur puisse visualiser les données inscrites sur l'écran, et des moyens de lecture des étiquettes RFID situés dans un logement en avant de la poignée, dans un plan ayant pour normale une direction correspondant essentiellement à la direction de pointage du terminal lorsqu'un utilisateur tient la poignée. Les moyens de lecture de l'antenne RFID rayonnent donc essentiellement dans la direction de pointage du terminal, qui correspond à la direction dans laquelle se trouvent les objets et également les étiquettes.

On connait par exemple, les documents WO 02/073512 A1 et US 2001/013830 A1 qui décrivent un appareil de lecture d'étiquettes RFID selon le préambule de la revendication 1.

Toutefois, dans certains cas, par exemple dans le cas de vêtements disposés sur un rack, les objets peuvent être si serrés que les moyens de lecture peuvent difficilement différencier les signaux de deux étiquettes. On a donc besoin d'augmenter la puissance d'émission de ces moyens de lecture, diminuant alors la maniabilité de l'appareil (en augmentant son poids car la batterie nécessaire est plus lourde) ou son autonomie.

L'invention a pour but de fournir un appareil permettant une lecture performante d'étiquettes en toute situation, et ce sans rendre les conditions d'utilisation de l'appareil plus pénibles pour l'utilisateur.

A cet effet, il est proposé un appareil de lecture d'étiquettes RFID, notamment en vue de réaliser un inventaire, selon la revendication 1.

On rappelle que « distal » désigne la partie d'un appareil la plus éloignée du corps de l'utilisateur lorsque l'appareil est tenu par l'utilisateur et en utilisation. « proximal » désigne la partie la plus proche du corps de celui-ci.

Un tel positionnement, en utilisation, des moyens de lecture RFID permet de faciliter la lecture des étiquettes RFID par ces moyens. En effet, les moyens de lecture RFID s'étendant généralement quasiment en 2 dimensions, l'épaisseur de ces moyens étant limitée selon la troisième dimension. Il est donc possible, comme cela a été fait dans l'invention, de diminuer la dimension de l'enveloppe de protection selon une direction privilégiée normale au plan dans lequel sont disposés les moyens de lecture. Cette direction correspondant dans l'invention à une direction horizontale essentiellement perpendiculaire à la direction de pointage, lorsque l'appareil est en utilisation, de sorte que l'enveloppe de protection peut être insérée, au moins en partie, entre deux produits ou dans des zones peu accessibles pour la lecture d'étiquettes RFID qui s'y trouvent.

En outre, les moyens de lecture étant orientés dans une direction perpendiculaire aux moyens de lecture de l'état de la technique, ils rayonnent dans la direction privilégiée perpendiculaire à la direction de pointage, soit la direction dans laquelle se trouvent les étiquettes RFID une fois que les moyens de lecture sont insérés entre les objets à inventorier.

On peut donc beaucoup plus facilement que dans l'état de la technique lire les étiquettes RFID des objets à inventorier et ce sans augmenter la puissance d'émission des moyens de lecture RFID et donc sans diminuer la maniabilité de l'appareil et en augmentant son autonomie, ce qui permet de ne pas compliquer son utilisation.

L'invention est bien entendu particulièrement adaptée dans le cas de vêtements disposés sur des racks mais peut également être adaptée à de nombreux autres cas.

Les moyens de visualisation sont destinés à être disposés dans un plan sensiblement horizontal lorsque l'utilisateur tient les moyens de prise.

Le logement pour les moyens de lecture RFID est lui situé dans un plan sensiblement vertical lorsque l'utilisateur tient les moyens de prise.

Selon l'invention, la dimension de l'enveloppe varie continûment de sorte que la dimension de l'extrémité distale de l'enveloppe soit inférieure à la dimension de son extrémité proximale, dans la direction normale au plan du logement des moyens de lecture.

L'appareil présente ainsi une certaine liberté de conception permettant de placer des éléments fonctionnels autres que les moyens de lecture dans l'enveloppe de protection.

La dimension de l'enveloppe varie continûment pour faciliter l'insertion de l'appareil entre les objets à inventorier.

De plus, l'enveloppe a une forme biseautée à son extrémité distale.

On notera que la dimension de l'enveloppe à son extrémité proximale est inférieure à 8 cm, de préférence 7 cm.

L'enveloppe de protection a une section essentiellement semi-circulaire dans le plan correspondant au plan du logement. Cela permet également de faciliter l'insertion de l'appareil entre les objets à inventorier en évitant notamment qu'un angle pointu ne s'accroche avec l'un des objets à inventorier.

L'enveloppe de protection comprend deux demi-coques, le plan de contact des deux coques correspondant essentiellement au plan du logement, ce qui permet de faciliter la mise en place des moyens de lecture RFID facilitant l'accès à ceux-ci pour des raisons de maintenance.

Les moyens de prise comprennent une poignée s'étendant selon une direction essentiellement perpendiculaire au plan des moyens de visualisation, les moyens de visualisation étant placés au-dessus de la poignée.

Les moyens de lecture RFID peuvent comprendre une antenne RFID, par exemple une antenne UHF, et éventuellement des moyens pour augmenter la directivité de ladite antenne tels que par exemple une barrette en cuivre de longueur quart d'onde disposée devant l'antenne, notamment dans le plan du logement, et/ou un plan de masse électrique disposé derrière l'antenne, notamment dans le plan du logement.

Ainsi, l'appareil selon l'invention réalise une lecture d'étiquettes RFID en nombre, par exemple des dizaines d'étiquettes RFID, et en longue distance, par exemple à une distance de plusieurs mètres.

Les moyens de lecture d'une étiquette RFID peuvent également comprendre des moyens d'écriture d'une étiquette RFID. Dans un mode de réalisation particulier, les moyens de lecture peuvent être utilisés pour écrire dans une étiquette RFID. C'est pourquoi dans la suite de la description, les premiers moyens seront appelés les moyens de lecture/écriture.

Les moyens de visualisation peuvent comprendre un écran de visualisation. Ils peuvent également être couplés à des moyens de saisie, tels qu'un clavier de saisie de données. Les moyens de visualisation et/ou de saisie peuvent par exemple faire partie d'un même PDA.

L'enveloppe de protection peut être connectée à l'ensemble de la poignée et des moyens de visualisation aux deux extrémités de l'ensemble selon la direction principale de la poignée, de façon à définir un évidement entre l'enveloppe et la poignée, afin d'améliorer la prise de l'appareil par l'utilisateur.

L'enveloppe peut être connectée à l'ensemble de la poignée et des moyens de visualisation de façon escamotable. On peut alors déconnecter facilement l'enveloppe de protection du reste de l'appareil sans démonter celle-ci et changer le module défectueux facilement avant de le réparer sans pour autant que l'autre module non défectueux de l'appareil soit immobilisé.

L'enveloppe est fixée à l'ensemble de la poignée et des moyens de visualisation au moins partiellement par coopération de formes, par exemple par clipsage.

L'appareil de lecture d'étiquettes RFID peut également comprendre un circuit d'alimentation électrique des moyens de lecture RFID et des moyens de visualisation, et :
- au moins une première batterie prévue pour alimenter les moyens de lecture RFID, et
- au moins une deuxième batterie prévue pour alimenter les moyens de visualisation.

L'appareil selon l'invention peut comporter une première batterie dédiée à alimenter uniquement les moyens de lecture/écriture d'étiquettes RFID et une deuxième batterie qui est dédiée à l'alimentation des deuxièmes moyens de lecture et/ou de saisie de données.

On peut ainsi encore augmenter l'autonomie de l'appareil.

Par ailleurs, le fait de disposer d'une première batterie dédiée à l'alimentation des moyens de lecture RFID et d'une deuxième batterie dédiée à l'alimentation des moyens de visualisation permet d'adapter le choix de chaque batterie à la consommation et aux caractéristiques d'une part des moyens de lecture RFID et d'autre part des moyens de visualisation sans avoir à réaliser de compromis.

Chacune des première et deuxième batteries peut être escamotable ou non.

La première batterie alimentant les moyens de lecture RFID peut être placée dans l'enveloppe de protection, au niveau de son extrémité proximale, grâce à la forme donnée à l'enveloppe. Elle peut également être fixée à l'enveloppe mais être placée à l'extérieur de celle-ci.

La deuxième batterie alimentant les moyens de visualisation et/ou de saisie peut être placée dans la poignée de l'appareil.

Dans une version avantageuse, l'appareil selon l'invention peut en outre comprendre un unique circuit de charge pour charger en même temps la première batterie et la deuxième batterie.

Ainsi, lorsqu'une des batteries est déchargée et est mise en charge l'autre batterie est également chargée en même temps.

Avantageusement, l'appareil selon l'invention peut en outre comprendre au moins un circuit de commutation commandé par l'utilisateur pour connecter ou déconnecter les moyens de lecture RFID à la première batterie. Ainsi, l'utilisateur peut décider de déconnecter les moyens de lecture/écriture à la première batterie pour augmenter l'autonomie de l'appareil selon l'invention.

Le circuit de commutation peut être commandé par un moyen d'actionnement, tel qu'un bouton ou une gâchette, actionné par l'utilisateur pour connecter la première batterie aux moyens de lecture/écriture. Un tel moyen d'actionnement peut être présent sur la poignée, notamment dans le logement défini par la poignée et l'enveloppe.

Plus particulièrement, le circuit de commutation peut être agencé de sorte que :
- lorsque le moyen d'actionnement est au repos ou non actionné, la première batterie est déconnectée des moyens de lecture/écriture, et
- lorsque le moyen d'actionnement est actionné par l'utilisateur, la première batterie est connectée aux moyens de lecture/écriture.
Ainsi, l'autonomie de la première batterie et donc de l'appareil selon l'invention est augmentée.

Avantageusement, l'appareil selon l'invention peut en outre comprendre un circuit de contrôle du niveau de charge de la première batterie et éventuellement de la deuxième batterie.

Ce circuit de contrôle de niveau de charge peut être connecté aux moyens de visualisation et/ou de saisie de données et prévu pour communiquer à ces moyens des données relatives au niveau de charge de la première batterie. Ainsi, le niveau de charge de la première batterie peut être renseigné à l'utilisateur soit en temps réel soit lorsque le niveau de charge de la deuxième batterie descend en dessous d'un niveau prédéterminé.

Le circuit d'alimentation peut comprendre un premier transformateur de tension et/ou de courant pour adapter la tension et/ou le courant électrique délivré par la première batterie aux moyens de lecture RFID. Ainsi, il est possible de choisir une première batterie présentant une plus grande capacité et donc une plus grande autonomie.

Avantageusement, le circuit de charge peut comprendre un ou plusieurs transformateurs de tension et/ou de courant pour adapter la tension et/ou le courant électrique délivré à la première batterie et/ou à la deuxième batterie, par exemple par un puits de chargement.

L'appareil selon l'invention peut en outre comprendre un module de communication entre les moyens de lecture/écriture RFID et les moyens de visualisation et/ou de saisie permettant une communication entre lesdits moyens.

Ce module de communication peut être couplé aux moyens de visualisation et/ou de saisie, par exemple dans un même PDA.

Un tel module de communication permet d'échanger des informations entre les moyens de lecture/écriture RFID et les moyens de visualisation et/ou de saisie de données.

Ainsi, le module de communication peut avantageusement être agencé pour :
- communiquer aux moyens de visualisation et de saisie au moins une donnée lue par les moyens de lecture RFID ; et/ou
- communiquer aux moyens de lecture au moins une donnée saisie ou sélectionnée par l'utilisateur grâce aux moyens de visualisation et/ou de saisie.

L'appareil selon l'invention peut également comprendre des moyens de mémorisation de données et accessibles par les moyens de lecture et/ou les moyens de visualisation.

De plus, l'appareil selon l'invention peut en outre comprendre des moyens de communication sans fil avec un appareil distant. Ces moyens de communication sans fil peuvent être adaptés pour réaliser par exemple une communication Bluetooth ou Wifi. Une telle communication peut être utilisée pour transférer à un deuxième appareil, les données lues par les moyens de lecture RFID, en temps réel ou sur demande.

L'appareil selon l'invention est particulièrement adapté à l'inventaire de produits portant des étiquettes RFID.

D'autres avantages et caractéristiques apparaîtront à l'examen de la description détaillée d'un mode de réalisation nullement limitatif, et des dessins annexés sur lesquels :
- la figure 1 est une représentation schématique du circuit électrique d'un exemple d'appareil selon l'invention ; et
- la figure 2 est une représentation de l'appareil comprenant le circuit de la figure 1 ;
- la figure 3 est une représentation d'une partie de l'appareil ouvert montrant les moyens de lecture RFID,
- la figure 4 est un diagramme de rayonnement de l'appareil selon l'invention en comparaison avec un diagramme de rayonnement d'un appareil de l'état de la technique.

Sur les figures et dans la suite de la description, les éléments communs à plusieurs figures conservent la même référence.

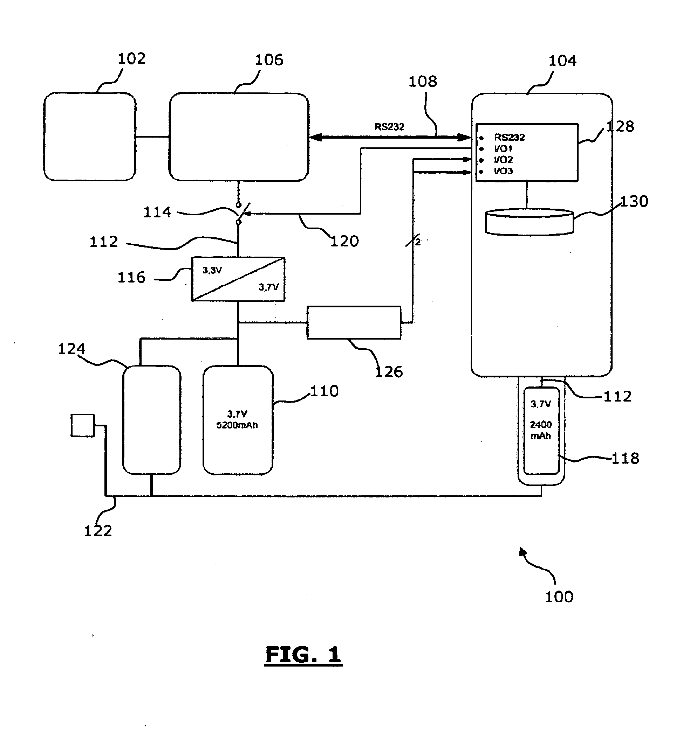

La figure 1 est une représentation schématique du circuit électrique d'un exemple d'appareil 100 de lecture et/ou d'écriture d'étiquettes RFID.

Tel que représenté sur la figure 1, l'appareil 100 comprend une antenne 102 de lecture et/ou d'écriture dans une étiquette RFID, qui dans l'exemple présent est une antenne UHF agencée pour lire des puces électroniques RFID de type IPX et EPC GEN2, un PDA 104 muni d'un écran de lecture de données et d'un clavier de saisie de données (non représentés). L'antenne UHF 102 est connectée à un coupleur RFID 106. Le coupleur RFID 106 et le PDA 104 échangent des données par l'intermédiaire d'une connexion 108 qui dans l'exemple présent est une connexion de type RS232.

L'appareil 100 comprend en outre une première batterie 110 reliée au coupleur RFID 106 grâce à un circuit d'alimentation 112 et un interrupteur 114. La première batterie 110 fournit une tension de 3,7 V et un courant de 5200 mA.

Le circuit d'alimentation 112 comprend un premier transformateur 116 réalisant une transformation de tension et de courant fourni par la première batterie 110 au coupleur RFID 106. Ainsi, le coupleur RFID 106 reçoit une tension de 3,3V et un courant maximal de 1500 mA.

Selon l'invention, l'appareil 100 comprend en outre une deuxième batterie 118 prévue pour alimenter le PDA et délivrant une tension électrique de 3.7V pour 2400 mAh.

L'interrupteur 114 est commandé par un circuit de commutation 120 connecté au PDA 104 et plus particulièrement à une gâchette (non représentée) au niveau du PDA de sorte que :
- lorsque la gâchette est au repos, l'interrupteur 114 est ouvert, la première batterie 110 est déconnectée du coupleur RFID 106 et ne l'alimente pas, et
- lorsque la gâchette est actionnée par l'utilisateur, l'interrupteur 114 est fermé, la première batterie 110 est connectée au coupleur RFID 106 et alimente ce dernier ainsi que l'antenne UHF 102.

Lorsque la gâchette est relâchée, l'interrupteur 114 repasse dans une position ouverte, la première batterie 110 est déconnectée du coupleur RFID 106 et ne l'alimente plus. Ainsi, le coupleur RFID 106 et l'antenne RFID 102 ne sont alimentés par la première batterie 110 que lorsque l'utilisateur le désire.

Avantageusement, l'appareil 100 comprend en outre un circuit de charge 122 de charge de la première batterie 110 et de la deuxième batterie 118, à partir par exemple d'un puits de chargement. Ainsi, dès qu'une des deux batteries est déchargée, l'appareil 100 est mis en charge et l'autre batterie est chargée en même temps que la batterie déchargée.

Le circuit de charge 122 comporte un transformateur 124 réalisant une transformation de tension et/ou de courant fourni(s) à la première batterie lors du chargement.

L'appareil 100 comprend en outre un circuit 126 de contrôle de niveau de charge de la première batterie 110. Ce circuit 126 mesure en temps réel le niveau de charge de la première batterie 110. Cette information est transmise en temps réel au PDA 104 qui affiche en temps réel cette information sur son écran d'affichage.

Le PDA 104 comprend en outre un module 128 de communication avec le coupleur RFID 106 et le circuit 126 de contrôle de niveau de charge.

Le PDA comprend en outre des moyens de mémorisation 130 de données accessibles par l'utilisateur grâce à l'écran de lecture et/ou au clavier du PDA 104.

Le module de communication 128 gère tout échange de données avec le coupleur RFID et permet de :
- communiquer au PDA 104 les données lues par l'antenne UHF 102 et le coupleur RFID 106 ; et/ou
- communiquer au coupleur RFID 106 une donnée saisie par l'utilisateur sur le clavier du PDA 104 ou sélectionnée par l'utilisateur dans les moyens de mémorisation 130.

Ainsi, l'appareil selon l'invention peut également être utilisé pour écrire, dans une étiquette RFID, une donnée sélectionnée par l'utilisateur.

La donnée à écrire peut également être la dernière donnée lue ou toute autre donnée sélectionnée selon une fonction préalablement enregistrée dans le PDA 104.

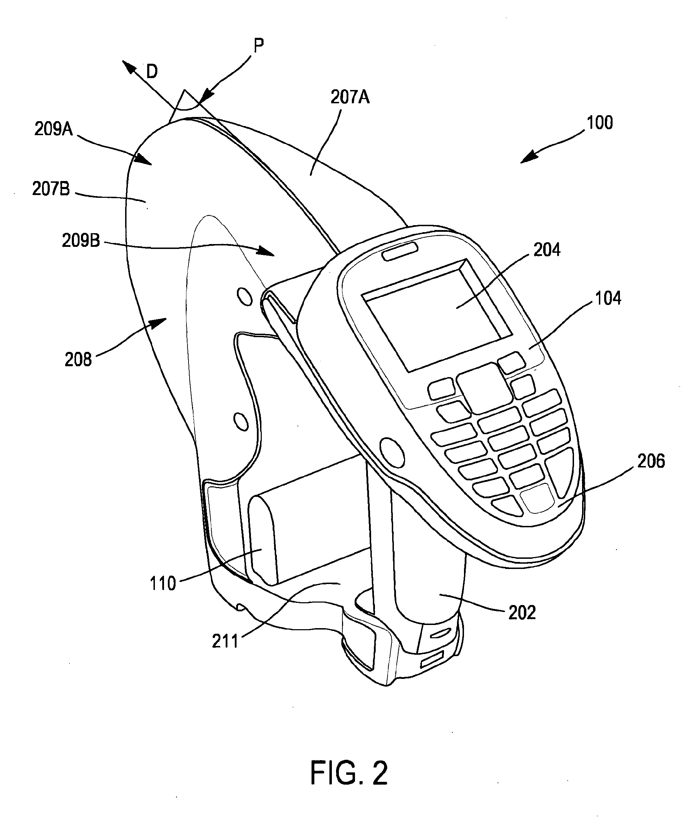

La figure 2 est une représentation de l'appareil de la figure 1 dans une configuration d'utilisation et plus particulièrement lorsqu'il est tenu par un utilisateur.

L'appareil 100 comporte à son extrémité proximale une poignée 202 au dessus de laquelle est disposé le PDA 104 avec l'écran 204 et le clavier 206 du PDA 104 dirigés vers l'utilisateur lorsque l'appareil 100 est saisi par l'utilisateur. Lorsque l'utilisateur saisit l'appareil, la poignée 202 est destinée à être essentiellement verticale alors que l'écran 204 est essentiellement horizontal.

La deuxième batterie 118, qui n'est pas visible sur la figure 2, est disposée dans la poignée 202 de l'appareil 100. La deuxième batterie peut être escamotable.

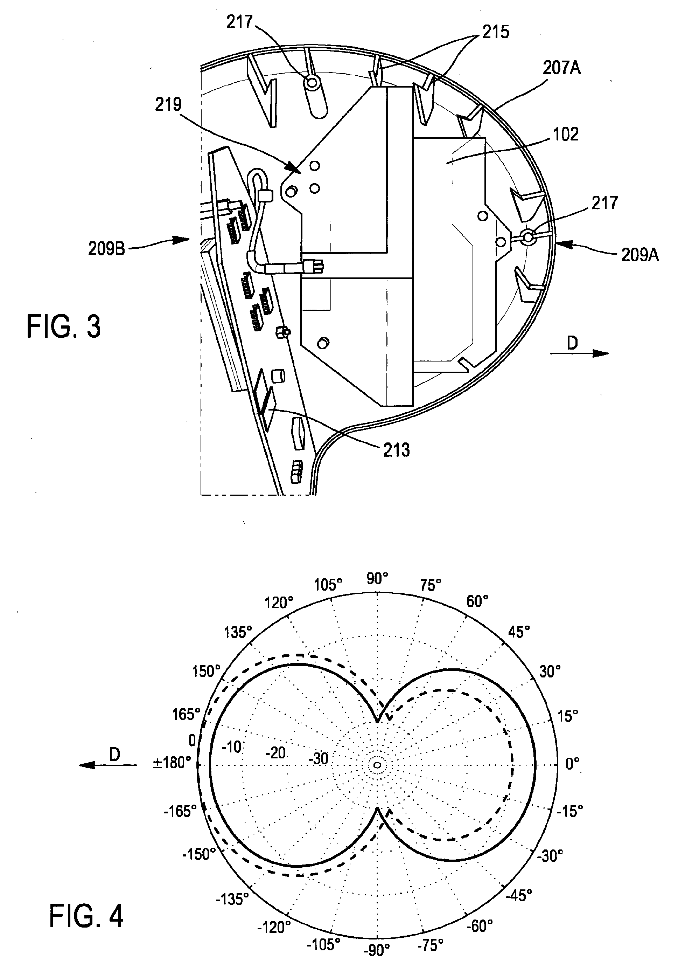

L'antenne UHF, essentiellement plane, est disposée dans un logement de forme essentiellement complémentaire, délimité par une enveloppe de protection 208. Le plan P du logement (correspondant au plan de la figure 3) est un plan sensiblement perpendiculaire à celui de l'écran, et essentiellement vertical lorsque l'utilisateur tient l'appareil par la poignée. Le plan P selon lequel est situé le logement comprend la direction de pointage D de l'appareil (direction vers laquelle est dirigé l'appareil lorsque l'utilisateur qui le tient visualise l'écran).

L'enveloppe de protection est réalisée en plastique et disposée devant la poignée 202, à savoir plus éloignée de l'utilisateur que la poignée, et fait saillie vers l'avant par rapport au PDA 104. Elle a une forme de demi-disque disposé verticalement. L'antenne UHF 102 est positionnée à l'avant de cette enveloppe 208.

Comme on le voit sur la figure 4, cette disposition de l'antenne permet d'augmenter le rayonnement de l'appareil tel que décrit (en bleu sur la figure 4) vers l'avant et sur les côtés relativement à un appareil de l'état de la technique tel que décrit en préambule (en rouge sur la figure 4). Le rayonnement vers l'arrière est moindre dans l'antenne selon l'invention mais cela n'a pas d'importance pour l'utilisation de l'appareil puisque les étiquettes sont situées en avant et sur les côtés de l'antenne. Ainsi, grâce à la forme du terminal selon l'invention, on modifie le positionnement de l'antenne UHF 102, ce qui permet d'augmenter la performance de lecture d'étiquettes en toutes situations.

La dimension de l'enveloppe 208 diminue continûment selon sa dimension horizontale normale à la direction de pointage, de sorte qu'à son extrémité distale 209A, l'enveloppe est moins épaisse qu'à son extrémité proximale 209B. L'enveloppe présente en réalité une forme biseautée à son extrémité distale pour faciliter l'insertion de l'antenne entre les objets à inventorier. Elle mesure ainsi moins de 5, et notamment environ 3 cm à son extrémité distale. A son extrémité proximale, elle est plus épaisse (environ 7 cm) et permet d'accueillir une carte électronique 213 portant une pluralité d'organes fonctionnels tels que ceux décrits plus haut.

L'enveloppe est réalisée en deux demi-coques 207A, 207B en forme de demi-disque dont le plan de contact correspond au plan du logement de l'antenne UHF. Ces deux demi-coques sont reliées entre elles par vissage.

On voit sur la figure 3 l'intérieur de la demi-coque 207A portant l'antenne 102. Le plan P du logement correspond donc au plan selon lequel les deux demi-coques sont en contact. On aperçoit également sur cette figure des nervures 215 formant renforts mécaniques pour assurer la rigidité de l'enveloppe 208, des orifices de vissage 217 pour assurer la fermeture des deux demi-coques 207A, 207B et également des moyens de positionnement de l'antenne 102 comprenant des ergots 219 destinés à coopérer avec des trous ménagés dans l'antenne.

L'enveloppe 208 est reliée à l'ensemble de la poignée 202 et du PDA 204 au niveau des extrémités longitudinales de cet ensemble. De cette façon, on forme un évidement 211 entre la poignée et l'enveloppe, ce qui permet de faciliter la prise de l'appareil par l'utilisateur. Cette liaison est effectuée par coopération de forme et peut être escamotable de façon à rendre l'enveloppe de protection complètement indépendante de l'ensemble de la poignée 202 et du PDA 204.

La première batterie 110 est disposée de manière escamotable entre le logement 208 et la poignée 202, dans l'évidement 211.

Enfin l'appareil 100 comporte une gâchette (non visible) pour actionner le circuit de commutation 120 et alimenter le coupleur RFID 106 en fermant l'interrupteur 114. Cette gâchette est également située sur la poignée, dans l'évidement 211.

Bien entendu l'invention n'est pas limitée aux exemples qui viennent d'être décrits. En particulier, on pourra trouver des appareils présentant une forme selon l'invention qui ne comprennent qu'une seule batterie pour alimenter à la fois les moyens de lecture et les moyens de visualisation.

## Revendications

1. Appareil (100) de lecture d'étiquettes RFID, notamment en vue de réaliser un inventaire, comprenant :
- des moyens de lecture (102) d'une étiquette RFID,
- des moyens de visualisation (204) de données par un utilisateur,
- des moyens de prise (202) de l'appareil par un utilisateur,
dans lequel :
- les moyens de visualisation (204) sont positionnés relativement aux moyens de prise de façon à être visibles par l'utilisateur lorsqu'il tient les moyens de prise, et
- les moyens de lecture RFID (102) sont positionnés dans la partie distale de l'appareil, dans un logement s'étendant essentiellement selon un plan (P) sensiblement perpendiculaire au plan des moyens de visualisation et comprenant une direction formant un angle inférieur à 5° avec la direction de pointage (D) correspondant à la direction dans laquelle est dirigé l'appareil lorsque l'utilisateur tient les moyens de prise et visualise les moyens de visualisation,
- le logement est délimité par une enveloppe de protection (208), la dimension de l'enveloppe selon une direction essentiellement normale au plan du logement étant inférieure à 5 cm, de préférence 3 cm, à son extrémité distale (209A) ;
**caractérisé en ce que** :
- la dimension de l'enveloppe varie continûment telle que la dimension de l'extrémité distale (209A) de l'enveloppe (208) soit inférieure à la dimension de son extrémité proximale (209B) selon la normale au plan (P) du logement, et
- l'enveloppe est biseautée à son extrémité distale.

2. Appareil selon la revendication précédente, **caractérisé en ce que** l'enveloppe de protection (208) a une section essentiellement semi-circulaire dans le plan correspondant au plan (P) du logement.

3. Appareil selon l'une quelconque des revendications précédentes, **caractérisé en ce que** l'enveloppe de protection (208) comprend deux demi-coques (207A, 207B), le plan de contact des deux coques correspondant essentiellement au plan (P) du logement.

4. Appareil selon l'une quelconque des revendications précédentes, **caractérisé en ce que** les moyens de prise comprennent une poignée (202) s'étendant selon une direction essentiellement perpendiculaire au plan des moyens de visualisation (204), les moyens de visualisation étant placés au-dessus de la poignée.

5. Appareil selon la revendication précédente, dans lequel l'enveloppe de protection (208) est connectée à l'ensemble de la poignée (202) et des moyens de visualisation (204) aux deux extrémités de l'ensemble selon la direction principale de la poignée, de façon à définir un évidement (211) entre l'enveloppe et la poignée.

6. Appareil selon l'une quelconque des revendications précédentes, **caractérisé en ce que** les moyens de lecture RFID comprennent une antenne RFID (102), telle qu'une antenne UHF, et éventuellement des moyens pour augmenter la directivité de ladite antenne tels qu'une barrette en cuivre de longueur quart d'onde et/ou un plan de masse électrique.

7. Appareil selon l'une quelconque des revendications précédentes, **caractérisé en ce qu'il** comprend un PDA (104) incluant les moyens de visualisation, constitués notamment par un écran (204).

8. Appareil selon l'une quelconque des revendications précédentes, **caractérisé en ce qu'il** comprend un circuit d'alimentation électrique des moyens de lecture RFID et des moyens de visualisation, et :
- au moins une première batterie (110) prévue pour alimenter les moyens de lecture RFID, et
- au moins une deuxième batterie (118) prévue pour alimenter les moyens de visualisation.

## Patentansprüche

1. Gerät (100) zum Lesen von RFID-Etiketten, insbesondere zur Durchführung einer Inventur, umfassend:
- Mittel zum Lesen (102) eines RFID-Etiketts,
- Mittel zum Anzeigen (204) von Daten durch einen Benutzer,
- Mittel zum Greifen (202) des Gerätes durch einen Benutzer,
wobei
- die Anzeigemittel (204) relativ zu den Greifmitteln derart angeordnet sind, dass sie durch den Benutzer sichtbar sind, wenn er die Greifmittel hält, und
- die RFID-Lesemittel (102) im distalen Teil des Gerätes in einer Aufnahme angeordnet sind, die sich im Wesentlichen in einer Ebene (P) erstreckt, welche zu der Ebene der Anzeigemittel im Wesentlichen senkrecht ist und eine Richtung umfasst, die mit der Zeigerichtung (D), welche der Richtung entspricht, in die das Gerät gerichtet ist, wenn der Benutzer die Greifmittel hält und die Anzeigemittel betrachtet, einen Winkel von weniger als 5° bildet,
- die Aufnahme durch eine Schutzhülle (208) begrenzt ist, wobei die Abmessung der Hülle in einer zu der Ebene der Aufnahme im Wesentlichen normalen Richtung kleiner als 5 cm, vorzugsweise 3 cm, an ihrem distalen Ende (209A) ist;
**dadurch gekennzeichnet, dass**:
- die Abmessung der Hülle sich derart kontinuierlich ändert, dass die Abmessung des distalen Endes (209A) der Hülle (208) kleiner ist als die Abmessung ihres proximalen Endes (209B) entlang der Normalen zur Ebene (P) der Aufnahme, und
- die Hülle an ihrem distalen Ende abgeschrägt ist.

2. Gerät nach dem vorhergehenden Anspruch, **dadurch gekennzeichnet, dass** die Schutzhülle (208) einen im Wesentlichen halbkreisförmigen Querschnitt in der der Ebene (P) der Aufnahme entsprechenden Ebene aufweist.

3. Gerät nach einem der vorhergehenden Ansprüche, **dadurch gekennzeichnet, dass** die Schutzhülle (208) zwei Halbschalen (207A, 207B) umfasst, wobei die Kontaktebene der beiden Schalen im Wesentlichen der Ebene (P) der Aufnahme entspricht.

4. Gerät nach einem der vorhergehenden Ansprüche, **dadurch gekennzeichnet, dass** die Greifmittel einen Griff (202) umfassen, der sich in einer Richtung im Wesentlichen senkrecht zu der Ebene der Anzeigemittel (204) erstreckt, wobei die Anzeigemittel oberhalb des Griffes angeordnet sind.

5. Gerät nach dem vorhergehenden Anspruch, wobei die Schutzhülle (208) mit der Anordnung aus Griff (202) und Anzeigemitteln (204) an beiden Enden der Anordnung in der Hauptrichtung des Griffes verbunden ist, so dass zwischen der Hülle und dem Griff eine Ausnehmung (211) definiert wird.

6. Gerät nach einem der vorhergehenden Ansprüche, **dadurch gekennzeichnet, dass** die RFID-Lesemittel eine RFID-Antenne (102), wie eine UHF-Antenne, sowie eventuell Mittel zur Erhöhung der Richtwirkung der Antenne, wie einen Kupfersteg mit Viertelwellenlänge und/oder eine elektrische Masseebene umfassen.

7. Gerät nach einem der vorhergehenden Ansprüche, **dadurch gekennzeichnet, dass** es einen PDA (104), der die insbesondere durch ein Display (204) gebildeten Anzeigemittel einschließt, umfasst.

8. Gerät nach einem der vorhergehenden Ansprüche, **dadurch gekennzeichnet, dass** es einen Kreis zur Stromversorgung der RFID-Lesemittel und der Anzeigemittel umfasst sowie:
- wenigstens eine erste Batterie (110), die vorgesehen ist, um die RFID-Lesemittel zu versorgen, und
- wenigstens eine zweite Batterie (118), die vorgesehen ist, um die Anzeigemittel zu versorgen.

## Claims

1. A device (100) for reading RFID tags, in particular for carrying out stocktaking, comprising:
- means (102) for reading an RFID tag,
- means (204) for displaying data by a user,
- means (202) for holding of the device by a user,
wherein:
- the display means (204) are positioned in relation to the holding means so that they can be viewed by the user when he/she holds the holding means, and
- the RFID reading means (102) are positioned in the distal portion of the device, in a housing extending essentially in a plane (P) substantially perpendicular to the plane of the display means and comprising a direction forming an angle of less than 5° with the direction of orientation (D) corresponding to the direction in which the device is directed when the user holds the holding means and views the display means,
- the housing is delimited by a protective case (208), the dimension of the case in a direction essentially normal to the plane of the housing being less than 5 cm, preferably 3 cm, at its distal end (209A);
**characterized in that**:
- the dimension of the case varies continuously such that the dimension of the distal end (209A) of the case (208) is less than the dimension of its proximal end (209B) along the normal to the plane (P) of the housing, and
- the case is tapered at its distal end.

2. The device according to the preceding claim, **characterized in that** the protective case (208) has an essentially semi-circular cross section in the plane corresponding to the plane (P) of the housing.

3. The device according to any one of the preceding claims, **characterized in that** the protective case (208) comprises two half-shells (207A, 207B), the plane of contact of the two shells corresponding essentially to the plane (P) of the housing.

4. The device according to any one of the preceding claims, **characterized in that** the holding means comprise a handle (202) extending in a direction essentially perpendicular to the plane of the display means (204), the display means being positioned above the handle.

5. The device according to the preceding claim, in which the protective case (208) is connected to the assembly of the handle (202) and display means (204) at both ends of the assembly in the main direction of the handle, so as to define a gap (211) between the case and the handle.

6. The device according to any one of the preceding claims, **characterized in that** the RFID reading means comprise an RFID antenna (102), such as a UHF antenna, and optionally means for increasing the directivity of said antenna such as a copper rod one quarter wavelength long and/or an electrical ground plane.

7. The device according to any one of the preceding claims, **characterized in that** it comprises a PDA (104) including the display means, constituted in particular by a screen (204).

8. The device according to any one of the preceding claims, **characterized in that** it comprises a power supply circuit for the RFID reading means and the display means, and:
- at least one first battery (110) provided for supplying the RFID reading means, and
- at least one second battery (118) provided for supplying the display means.
